# EUROPÄISCHE PATENTANMELDUNG

(11) **EP 2 178 278 A1**
(43) Veröffentlichungstag der Anmeldung: **21.04.2010**
(21) Anmeldenummer: 09013150.9
(22) Anmeldetag: 19.10.2009
(51) Int. Cl.: H04M 1/2745, G06F 11/14

(54) **Sichern von Kontaktdaten eines mobilen Endgeräts**

(30) Priorität: 20.10.2008 DE 102008052344
(71) Anmelder: Giesecke & Devrient GmbH, 81677 München (DE)
(72) Erfinder: Rankl, Wolfgang, 81825 München (DE)

(57) **Zusammenfassung**

Die Erfindung schafft ein Verfahren zum Sichern von Kontaktdaten eines mobilen Endgeräts (10), bei einer Mobilfunkstation mit dem Endgerät (10) und einem Sicherheitsmodul (20) zum Betreiben des Endgeräts (10) in einem Mobilfunksystem. Eine Sicherungs-Kontaktdatei (21) des Sicherheitsmoduls (20) wird mit einer Kontaktdatei (11) des Endgeräts (10) laufend synchronisiert wird, wobei anlässlich einer Änderung von Kontaktdaten in der Kontaktdatei (11) eine entsprechende Sicherungs-Änderung der entsprechenden Kontaktdaten in der Sicherungs-Kontaktdatei (21) durchgeführt wird, wobei die Sicherungs-Änderung möglichst zeitnah zur Änderung durchgeführt wird. Die Sicherungs-Änderung wird mittels einer Datenübertragung über eine interne Schnittstelle (30) zwischen dem Endgerät (10) und dem Sicherheitsmodul (20) durchgeführt, wobei als Schnittstelle (30) zwischen dem Endgerät (10) und dem Sicherheitsmodul (20) eine Hochgeschwindigkeitsschnittstelle mit einer Datenübertragungsrate von mindestens 1 Mbit/ s vorgesehen ist.

## Beschreibung

Die Erfindung betrifft ein Verfahren zum Sichern von Kontaktdaten eines mobilen Endgeräts, bei einer Mobilfunkstation mit dem Endgerät und einem Sicherheitsmodul zum Betreiben des Endgeräts in einem Mobilfunksystem, wobei im Endgerät eine mit Kontaktdaten bespeicherbare Kontaktdatei abgespeichert ist.

Die Erfindung geht aus von einer Mobilfunkstation mit einem mobilen Endgerät und einem im Endgerät betreibbaren Sicherheitsmodul. Das Sicherheitsmodul ist zur Authentisierung des Endgeräts gegenüber einem Hintergrundsystem eines Mobilfunkbetreibers eingerichtet. Als Endgerät ist beispielsweise ein Mobiltelefon, PDA mit Mobilfunkfunktion, Smart Phone oder dergleichen vorgesehen. Als Sicherheitsmodul ist beispielsweise eine SIM-Karte oder USIM-Karte vorgesehen.

Im mobilen Endgerät kann der Inhaber des Endgeräts in einer Kontaktdatenbank Kontaktdaten zu Kontakten, beispielsweise Personen, abspeichern, wie z.B. Rufnummern, Adressen, Fotos zum jeweiligen Kontakt, häufig innerhalb einer einzigen Kontaktdatei.

Ein Format zum Abspeichern von Kontaktdaten ist das Microsoft Office Outlook - kurz MS Outlook - Mobile Format. Bei diesem Format ist als Kontaktdatei die sogenannte PST-Datei vorgesehen.

Da mobile Endgeräte bei der Speicherung von Kontaktdaten mehr und mehr Orte wie PCs oder Adressbücher ablösen, ist die im Endgerät vorgesehene Kontaktdatei besonders schützenswert. Um die Kontaktdaten gegen Verlust zu sichern, werden herkömmlicherweise in mehr oder weniger regelmäßigen Zeitabständen externe Sicherungskopien der Kontaktdatei erstellt.

Bei einer ersten Variante der Kontaktdaten-Sicherung wird das Endgerät an einen PC angeschlossen, z.B. über eine kabelgebundene Verbindung oder eine Funk-Verbindung, z.B. Kurzstreckenfunk-Verbindung, und die Kontaktdatei über die Verbindung auf den PC kopiert. Änderungen der Kontaktdatei werden bei dieser Variante frühestens beim nächsten Anschließen des Endgeräts an den PC gesichert.

Bei einer zweiten Variante der Kontaktdaten-Sicherung wird auf einem Server im Hintergrundsystem des Mobilfunkbetreibers eine Sicherungskopie der Kontaktdatei erstellt und laufend aktualisiert. Bei dieser zweiten Variante ist im Endgerät oder im Sicherheitsmodul eine Applikation installiert, die bei Änderungen der im Endgerät geführten Kontaktdatei die Änderungen zeitnah an den Server im Hintergrundsystem sendet, in der Regel über das Mobilfunknetz. Im Fall des Verlusts von Kontaktdaten oder der gesamten Kontaktdatei im Endgerät kann die Kontaktdatei aus dem Hintergrundsystem heraus in das Endgerät rekonstruiert werden. Bei der zweiten Variante ist in der Regel jede Übertragung von Kontaktdaten vom Endgerät zum Hintergrundsystem und /oder umgekehrt vom Hintergrundsystem zum Endgerät kostenpflichtig gemäß Tarifbestimmungen des Mobilfunkbetreibers und optional auch für die Bereitstellung der Dienstleistung der Kontaktdaten-Sicherung eine Grundgebühr an den Mobilfunkbetreiber zu zahlen. Zudem werden unter Umständen sensible und vertrauliche Daten über relativ unsichere Verbindungen eines Mobilfunknetzes gesendet.

DE 100 54 944 A1 beschreibt ein Verfahren zum Übertragen von Telefonbuch-Daten eines mobilen Endgeräts auf ein anderes mobiles Endgerät, indem die Daten vom Endgerät auf die SIM-Karte und von dort auf das andere Endgerät übertragen werden.

DE 10 2006 024 882 A1 beschreibt ein Verfahren zum Synchronisieren eines in einer SIM-Karte gespeicherten Telefonbuchs mit einem in einem Mobiltelefon gespeicherten Telefonbuch, mittels einer mit Zusatzfunktionen versehenen SIM-Karte. Dabei wird, gesteuert durch einen in der SIM-Karte implementierten Telefonbuchserver oder Telefonbuchclient, über eine Kommunikationsschnittstelle wie z.B. TCP/IP oder BIP ein Datenaustausch zwischen der SIM-Karte und dem Mobiltelefon ermöglicht.

EP 1956 855 A1 schlägt vor, Kontaktdaten eines mobilen Endgeräts automatisch in die (U)SIM-Karte des Endgeräts zu speichern, nachdem die Kontaktdaten im Endgerät geändert worden sind, und dabei eine Wartezeit einzuhalten, um die Daten im Hintergrund zu speichern. EP 1956 855 A1 wird als nächstliegender Stand der Technik angesehen.

Der Erfindung liegt die Aufgabe zu Grunde, ein zuverlässiges und zugleich kostengünstiges Verfahren zum Sichern der Kontaktdaten eines mobilen Endgeräts zu schaffen.

Die Aufgabe wird gelöst durch ein Verfahren nach Anspruch 1. Vorteilhafte Ausgestaltungen der Erfindung sind in den abhängigen Ansprüchen angegeben.

Das erfindungsgemäße Verfahren gemäß dem unabhängigen Anspruch 1 ist zum Sichern von Kontaktdaten eines mobilen Endgeräts, bei einer Mobilfunkstation mit dem Endgerät und einem Sicherheitsmodul zum Betreiben des Endgeräts in einem Mobilfunksystem, eingerichtet. Dabei ist im Endgerät zumindest eine mit Kontaktdaten bespeicherbare Kontaktdatei abgespeichert. Im Sicherheitsmodul ist eine mit Kontaktdaten bespeicherbare Sicherungs-Kontaktdatei abgespeichert. Die Sicherungs-Kontaktdatei des Sicherheitsmoduls wird mit der Kontaktdatei des Endgeräts synchronisiert, wobei anlässlich einer Änderung von Kontaktdaten in der Kontaktdatei eine entsprechende Sicherungs-Änderung der entsprechenden Kontaktdaten in der Sicherungs-Kontaktdatei durchgeführt wird. Die Erfindung zeichnet sich dadurch aus, dass die Synchronisierung der Sicherungs-Kontaktdatei mit der Kontaktdatei laufend durchgeführt wird, wobei die Sicherungs-Änderung möglichst zeitnah zur Änderung durchgeführt wird, wobei die Sicherungs-Änderung mittels einer Datenübertragung über eine interne Schnittstelle zwischen dem Endgerät und dem Sicherheitsmodul durchgeführt wird, wobei als Schnittstelle zwischen dem Endgerät und dem Sicherheitsmodul eine Hochgeschwindigkeitsschnittstelle mit einer Datenübertragungsrate von mindestens 1 Mbit/ s vorgesehen ist.

Das Verfahren nach Anspruch 1 kommt zum Sichern der Kontaktdaten ohne teure Mobilfunkverbindungen aus. Zum anderen ermöglicht die Hochgeschwindigkeitsschnittstelle mit der hohen Datenübertragungsrate eine laufende und zeitnahe Synchronisierung der Kontaktdaten im Sicherheitsmodul mit den Kontaktdaten im mobilen Endgerät. Hierdurch ist die Gefahr reduziert, dass durch zeitliche Verzögerungen beim Synchronisieren Kontaktdaten verloren gehen, so dass das Verfahren besonders zuverlässig ist. Das Verfahren ist zudem zuverlässig und sicher, weil die in das Sicherheitsmodul gesicherten Kontaktdaten den Einflussbereich des Nutzers nicht verlassen, so dass eine Manipulation der Kontaktdaten stark erschwert ist.

Daher ist gemäß Anspruch 1 ein Verfahren zuverlässiges und zugleich kostengünstiges Verfahren zum Sichern der Kontaktdaten eines mobilen Endgeräts geschaffen.

Vorzugsweise ist als interne Schnittstelle eine USB-Schnittstelle vorgesehen. Die USB-Schnittstelle ermöglicht, je nach Art, Datenübertragungsraten von 1,5 Mbit/s,12 Mbit/s oder 480 Mbit/s.

Wahlweise ist als Kontaktdatei eine MS Outlook PST-Datei vorgesehen. Eine PST-Datei ermöglicht eine besonders komfortable Handhabung der Kontaktdaten.

Wahlweise wird zum Durchführen der Sicherungs-Änderung die gesamte Kontaktdatei einschließlich der Änderung vom mobilen Endgerät in das Sicherheitsmodul kopiert. Bei dieser Variante des Verfahrens ist eine aufwändige Überprüfung der Kontaktdaten oder der Kontaktdatei auf die genaue Art der Änderungen hin entbehrlich. Ebenso ist ein Herausfiltern der Änderungen aus der Gesamtheit der Kontaktdaten nicht erforderlich. Damit wird Rechenzeit eines Mikroprozessors des Endgeräts gespart. Auf Grund der hohen Datenübertragungsrate der internen Schnittstelle kann auf diese Weise das Kopieren der kompletten Kontaktdatei schneller sein als das Übertragen lediglich der Änderungen.

Wahlweise wird, nachdem die Änderung durchgeführt ist und bevor die Sicherungs-Änderung durchgeführt wird, durch die Mobilstation eine vorbestimmte Eingabe in eine Nutzersschnittstelle, z.B. Tastatur, Mikrofon, Touch-Screen etc., der Mobilstation die Mobilstation angefordert, wobei die Sicherungs-Änderung erst durchgeführt wird, sobald die vorbestimmte Eingabe in die Nutzerschnittstelle eingegeben ist. Hierdurch kann ein Nutzer beispielsweise Versuche von Sicherungs-Änderungen, bei denen eine intakte Sicherungs-Kontaktdatei im Sicherheitsmodul durch eine beschädigte Kontaktdatei aus dem Endgerät überschrieben würde, von Hand verhindern.

Wahlweise wird die Änderungs-Sicherung im Hintergrund durchgeführt wird, wobei bedarfsweise eine Wartezeit eingehalten, und die Sicherungs-Änderung erst frühestens nach Ablauf der Wartezeit durchgeführt wird. Die Änderungs-Sicherung im Hintergrund kann beispielsweise erfolgen wie in EP 1956 855 A1 beschrieben.

Bei einem Sicherheitsmodul mit einer Dateistruktur wird die PST-Datei wahlweise in einer Datei, d.h. einem Elementary File EF, der Dateistruktur transparent abgelegt. Verfügt das Sicherheitsmodul über ein Windowskompatibles Filesystem (z.B. FAT16, FAT32), kann die PST-Datei wahlweise direkt in einer entsprechenden Sicherungs-PST-Datei des Sicherheitsmoduls abgespeichert werden.

Die Erfindung ist besonders vorteilhaft für Sicherheitsmodule mit großem Speicher, z.B. Flash-Speicher, z.B. NAND-Flash.

Wahlweise wird die Sicherungs-Kontaktdatei aus dem Sicherheitsmodul in ein weiteres mobiles Endgerät übertragen. Wahlweise wird die Sicherungs-Kontaktdatei über eine interne Schnittstelle zwischen dem weiteren mobilen Endgerät und dem Sicherheitsmodul in das weitere mobile Endgerät übertragen. Wahlweise wird die Sicherungs-Kontaktdatei über eine externe Verbindung und unter Zwischenschaltung mindestens einer externen Datenverarbeitungsstruktur aus dem Sicherheitsmodul in das weitere mobile Endgerät übertragen wird. Die Datenverarbeitungsstruktur kann beispielsweise eine oder mehrere der folgenden Komponenten umfassen: PC, Server, drahtgebundene Verbindung, Funkverbindung, insbesondere kurzreichweitige Funkverbindung wie NFC, IR, RFID oder Bluetooth.

Die Erfindung ist insbesondere dann nützlich einsetzbar, wenn das mobile Endgerät oder die darin abgespeicherte Kontaktdatei beschädigt ist. In einem solchen Fall kann das Sicherheitsmodul in ein neues Endgerät eingelegt werden und die Kontaktdatei aus der Sicherungs-Kontaktdatei des Sicherheitsmoduls heraus restauriert werden und in das neue Endgerät übertragen werden, insbesondere über die interne Schnittstelle zwischen Endgerät und Sicherheitsmodul. Falls das neue mobile Endgerät über keine Einlesefunktion zum Lesen der Sicherungs-Kontaktdatei aus dem Sicherungsmodul verfügt, kann die Sicherungs-Kontaktdatei unter Zwischenschaltung einer externen Datenverarbeitungsstruktur in das neue mobile Endgerät übertragen werden. Beispielsweise wird das Sicherungsmodul mittels eines Schnittstellenadapters, z.B. eines USB-Adapters an einen Personal Computer (PC) angeschlossen, und die Sicherungs-Kontaktdatei wird mittels des Adapters auf den PC übertragen. Anschließend werden die Kontaktdaten vom PC aus mit dort zur Verfügung stehenden Mitteln auf das neue mobile Endgerät übertragen.

Gemäß einer Weiterbildung der Erfindung ist in dem Sicherheitsmodul ein Verbindungsserver implementiert ist. Anlässlich eines elektrischen Verbindens des Sicherheitsmoduls mit dem weiteren mobilen Endgerät oder ggf. mit zumindest einem Gerät, z.B. PC oder Server, der externen Datenverarbeitungsstruktur, wird mittels des Verbindungsserver eine datentechnische Verbindung zu dem weiteren mobilen Endgerät oder dem Gerät, z.B. PC, Server, hergestellt. Daraufhin ist die Sicherungs-Kontaktdatei - oder eine auf das weitere mobile Endgerät bzw. Gerät (PC, Server) angefertigte Kopie der Sicherungs-Kontaktdatei - über zumindest eine Nutzer-Schnittstelle am weiteren mobilen Endgerät bzw. Gerät bearbeitbar. Bei dieser Variante kann die Sicherungs-Kontaktdatei oder die Kopie davon am mobilen Endgerät (z.B. Mobiltelefon) oder am PC oder Server editiert werden, ohne dass am Endgerät bzw. Gerät (PC, Server etc.) eine Software zum Editieren einer Kontaktdatei installiert ist. Beispielsweise kann eine PST-Datei vom mobilen Endgerät oder Gerät (PC, Server etc.) aus editiert werden, ohne dass am Endgerät oder Gerät (PC, Server etc.) die Software MS Outlook installiert zu sein braucht, die ja kostenpflichtig ist, so dass Lizenzgebühren für MS Outlook auf dem mobilen Endgerät oder Gerät (PC, Server etc.) entfallen.

Gemäß einer Weiterbildung der Erfindung ist im Sicherheitsmodul ein elektronisches Telefonbuch mit einer auf dem mobilen Endgerät darstellbaren Menüstruktur implementiert. Dabei ist die Sicherheits-Kontaktdatei in der Menüstruktur des elektronischen Telefonbuchs auf dem mobilen Endgerät darstellbar. Wahlweise wird die Sicherheits-Kontaktdatei dabei automatisch in das Telefonbuch eingeblendet. Das Telefonbuch ist wahlweise ein ETSIkonformes Telefonbuch. Damit ist die Sicherheits-Kontaktdatei, und somit sind es auch die Kontaktdaten, mit jedem beliebigen mobilen Endgerät, das ETSI-Standards genügt, nutzbar.

Im Folgenden wird die Erfindung an Hand von Ausführungsbeispielen und unter Bezugnahme auf die Zeichnung näher erläutert, in der zeigen:
- Fig.1: ein Mobiltelefon und eine darin betriebene SIM-Karte, zur Veranschaulichung einer Datenübertragung vom Mobiltelefon zur SIM-Karte bei einem Verfahren gemäß einer Ausführungsform der Erfindung;
- Fig. 2: ein weiteres Mobiltelefon und die SIM-Karte aus Fig. 1 bei einer anschließenden Übertragung von Daten von der SIM-Karte zum weiteren Mobiltelefon.

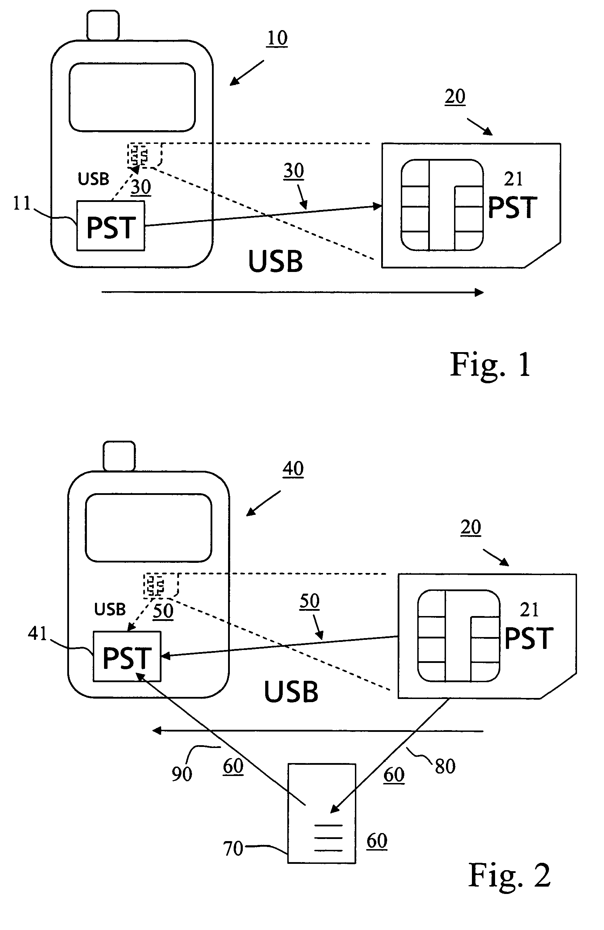

Fig.1 zeigt ein Mobiltelefon 10 und eine darin betriebene SIM-Karte 20, zur Veranschaulichung einer Datenübertragung vom Mobiltelefon 10 zur SIM-Karte 20 bei einem Verfahren gemäß einer Ausführungsform der Erfindung. In einer PST-Datei (Kontaktdatei) 11 werden im Mobiltelefon 10 Kontaktdaten gespeichert gehalten, wie Adressen, Rufnummern, Fotos und dergleichen. Die SIM-Karte 20 und das Mobiltelefon 10 sind über eine USB-Schnittstelle innerhalb des Mobiltelefons 10 miteinander koppelbar. Der Übersicht halber ist die SIM-Karte 20 außerhalb des Mobiltelefons 10 vergrößert dargestellt. Tatsächlich wird die SIM-Karte 20 im Mobiltelefon 10 betrieben, wie durch die gestrichelte SIM-Karte verdeutlicht. Über die USB-Schnittstelle 30 wird die PST-Datei 11 in die SIM-Karte 20 kopiert, um so eine Sicherungs-PST-Datei (Sicherungs-Kontaktdatei) 21 in der SIM-Karte 20 zu erstellen. Anlässlich von Aktualisierungen oder Änderungen der PST-Datei 11 wird durch Datenübertragung über die USB-Schnittstelle 30 auch die Sicherungs-PST-Datei 21 aktualisiert.

Fig. 2 zeigt ein weiteres Mobiltelefon 40 und die SIM-Karte 20 aus Fig. 1 bei einer anschließenden Übertragung von Daten von der SIM-Karte 20 zum weiteren Mobiltelefon 40, um die Sicherungs-PST-Datei 21 in das weitere Mobiltelefon 40 zu übertragen. Die Übertragung erfolgt wahlweise über die interne USB-Schnittstelle 50 des weiteren Mobiltelefons 40 oder über eine externe Datenverarbeitungsstruktur 60, die in Fig. 2 beispielhaft einen Personal Computer (PC) 70 und zwei drahtgebundenen Verbindungen 80, 90 zwischen der SIM-Karte 20 und dem PC 70 bzw. dem PC 70 und dem weiteren Mobiltelefon 40 aufweist.

## Patentansprüche

**1.** Verfahren zum Sichern von Kontaktdaten eines mobilen Endgeräts (10), bei einer Mobilfunkstation mit dem Endgerät (10) und einem Sicherheitsmodul (20) zum Betreiben des Endgeräts (10) in einem Mobilfunksystem, wobei
- im Endgerät (10) zumindest eine mit Kontaktdaten bespeicherbare Kontaktdatei (11) abgespeichert ist,
- im Sicherheitsmodul (20) eine mit Kontaktdaten bespeicherbare Sicherungs-Kontaktdatei (21) abgespeichert ist,
- die Sicherungs-Kontaktdatei (21) des Sicherheitsmoduls (20) mit der Kontaktdatei (11) des Endgeräts (10) synchronisiert wird, wobei anlässlich einer Änderung von Kontaktdaten in der Kontaktdatei (11) eine entsprechende Sicherungs-Änderung der entsprechenden Kontaktdaten in der Sicherungs-Kontaktdatei (21) durchgeführt wird,
**dadurch gekennzeichnet, dass**
- die Synchronisierung der Sicherungs-Kontaktdatei (21) mit der Kontaktdatei (11) laufend durchgeführt wird, wobei die Sicherungs-Änderung möglichst zeitnah zur Änderung durchgeführt wird, wobei
- die Sicherungs-Änderung mittels einer Datenübertragung über eine interne Schnittstelle (30) zwischen dem Endgerät (10) und dem Sicherheitsmodul (20) durchgeführt wird, wobei als Schnittstelle (30) zwischen dem Endgerät (10) und dem Sicherheitsmodul (20) eine Hochgeschwindigkeitsschnittstelle mit einer Datenübertragungsrate von mindestens 1 Mbit/s vorgesehen ist.

**2.** Verfahren nach Anspruch 1, wobei als interne Schnittstelle (30) eine USB-Schnittstelle vorgesehen ist.

**3.** Verfahren nach Anspruch 1 oder 2, wobei als Kontaktdatei (11) eine MS Outlook PST-Datei vorgesehen ist.

**4.** Verfahren nach einem der Ansprüche 1 bis 3, wobei zum Durchführen der Sicherungs-Änderung die gesamte Kontaktdatei (11) einschließlich der Änderung vom mobilen Endgerät (10) in das Sicherheitsmodul (20) kopiert wird.

**5.** Verfahren nach einem der Ansprüche 1 bis 4, wobei, nachdem die Änderung durchgeführt ist und bevor die Sicherungs-Änderung durchgeführt wird, durch die Mobilstation eine vorbestimmte Eingabe in eine Nutzersschnittstelle der Mobilstation die Mobilstation angefordert wird, und wobei die Sicherungs-Änderung erst durchgeführt wird, sobald die vorbestimmte Eingabe in die Nutzerschnittstelle eingegeben ist.

**6.** Verfahren nach einem der Ansprüche 1 bis 5, wobei die Änderungs-Sicherung im Hintergrund durchgeführt wird, wobei bedarfsweise eine Wartezeit eingehalten wird, und die Sicherungs-Änderung erst frühestens nach Ablauf der Wartezeit durchgeführt wird.

**7.** Verfahren nach einem der Ansprüche 1 bis 6, wobei die Sicherungs-Kontaktdatei (21) aus dem Sicherheitsmodul (20) in ein weiteres mobiles Endgerät (40) kopiert wird.

**8.** Verfahren nach Anspruch 7, wobei die Sicherungs-Kontaktdatei (21) über eine interne Schnittstelle (50) zwischen dem weiteren mobilen Endgerät (40) und dem Sicherheitsmodul (20) in das weitere mobile Endgerät (40) übertragen wird.

**8.** Verfahren nach Anspruch 7, wobei die Sicherungs-Kontaktdatei (21) über eine externe Verbindung und unter Zwischenschaltung mindestens einer externen Datenverarbeitungsstruktur (60) aus dem Sicherheitsmodul (20) in das weitere mobile Endgerät (40) übertragen wird.

**9.** Verfahren nach Anspruch 8, wobei die Datenverarbeitungsstruktur eine oder mehrere der folgenden Komponenten umfasst: PC (70), Server, drahtgebundene Verbindung (80, 90), Funkverbindung.

**10.** Verfahren nach einem der Ansprüche 7 bis 9, wobei in dem Sicherheitsmodul (20) ein Verbindungsserver implementiert ist, und wobei, anlässlich eines elektrischen Verbindens des Sicherheitsmoduls mit dem weiteren mobilen Endgerät (40) oder ggf. mit zumindest einem Gerät (70) der externen Datenverarbeitungsstruktur, mittels des Verbindungsserver eine datentechnische Verbindung zu dem weiteren mobilen Endgerät (40) oder dem Gerät (70) hergestellt wird, derart, dass die Sicherungs-Kontaktdatei (21) oder eine Kopie der Sicherungs-Kontaktdatei (21) auf dem weiteren mobilen Endgerät (40) bzw. Gerät (70) über zumindest eine Nutzer-Schnittstelle am weiteren mobilen Endgerät (40) bzw. Gerät (70) bearbeitbar ist.

**11.** Verfahren nach einem der Ansprüche 1 bis 10, wobei im Sicherheitsmodul (20) ein elektronisches Telefonbuch mit einer auf dem mobilen Endgerät (10) darstellbaren Menüstruktur implementiert ist, und wobei die Sicherheits-Kontaktdatei (21) in der Menüstruktur des elektronischen Telefonbuchs auf dem mobilen Endgerät (10) darstellbar ist.
